Europäisches Patentamt

European Patent Office

Office européen des brevets

(19)

(11) Publication number: 0 553 698 A1

# EUROPEAN PATENT APPLICATION

(12)

(21) Application number: 93100771.0

(22) Date of filing: 20.01.93

(51) Int. Cl.5: G02B 26/10

(30) Priority: 30.01.92 IT TN920001

(43) Date of publication of application:
04.08.93 Bulletin 93/31

(84) Designated Contracting States:
BE CH DE DK ES FR GB LI NL SE

(71) Applicant: Lunelli, Miriam
Via alla Formigheta, 50
I-38040 Martignano, Trento(IT)

(72) Inventor: Lunelli, Miriam
Via alla Formigheta, 50
I-38040 Martignano, Trento(IT)

(74) Representative: Nöth, Heinz, Dipl.-Phys.
Patentanwalt, Mozartstrasse 17
W-8000 München 2 (DE)

(54) Optical scanning device.

(57) An optical scanning device, particularly a laser scanner for linear vision along a polar path and for long distances, having a long range linear vision system including measurements, automation, inspection and image acquisition, a radiation beam source, for example a laser 1, whose beam 3 goes through the central transparent core of a spindle 7 rotated by a rotator 2, a first deflector 4 deflecting the beam 3 towards an object 6 through an aperture and light reflected by the object 6 is sent by a second deflector 8 to a detector 9.

Fig. 1

Rank Xerox (UK) Business Services
(3.10/3.6/3.3.1)

The invention is related to an optical scanning device.

The current technology offers the so called "video-camera" as general purpose sensor capable to convert images into electric signals. The video sensor has been developed along many decades, first using mechanical scanners, then using the vacuum tubes technology. Finally the solid state sensors named MOS and CCD have been developed.

These sensors are designed for the acquisition of two-dimensional images and are named color or black and white cameras.

For special purposes the so called "linear sensors" have been developed. The linear sensor is capable of acquiring images along a linear path.

The invention is related to the acquisition of images along a straight line or a curvilinear path.

These systems are named line vision systems and are employed for measuring applications, inspection systems, quality control systems, automatic navigation systems and, with the help of a moving holder, as vision systems and security systems.

The linear vision systems are limited by the usual characteristics of the optical system of a camera: they need manual or automatic focusing device, they need sunlight or artificial illuminations or lamps, the visual angle is determined by the lens and is limited. It is difficult to evaluate the distance of an object with low constrast with the help of automatic focusing devices. The complexity of the software employed to recognize the images and to measure the desired physical quantities is very high because of the presence of shadows in the acquired images. The cost of the entire system composed of sensor, illumination lamp, computer, acquisition hardware and software is very high.

Object of the invention is to present an optical scanning device which can be used for a linear vision along a polar path and which overcomes the limitations described before.

This object is solved by the features of patent claim 1. The subclaims include modifications of the invention.

This optical scanning device does not need any focusing system, it does not need sunlight or any illumination coming from lamps, it is not disturbed by any kind of external light, the visual angle can be 360 degrees, there is no limitation of the visual angle. It is also possible to measure the distance between the scanner and the detected objects using only one scanner. The measure depends on the LIDAR principle. The software dedicated to the recognition of the features of the images can be simple and cheap because of the absence of shadows in the image. The vision is detailed and reproducible because of the insensitivity to the conditions of the environment.

LIDAR means Light Detection And Ranging. The measurement is performed in the following way: some light carrying a temporal information, for example a pulse modulation or a sinusoidal modulation, or any other kind of modulation, or using the wavelike nature of light itself,is sent towards an object The object sends back to a sensor part of the light received. The measurement of the distance is performed by measuring the time that the light spends going from the emitter to the object and back to the sensor.

The scanning device has a simple structure and has only few components requiring high precision machining and tuning.

The maximum distance of a detectable object is high and can be increased at the expense of scanning speed and/or the miniaturization of the scanner. The installation is simple because the scanner itself draws a line of light that can be used as a guide for the scanner viewing line. A scanner enclosure or casing can be made compact, sealed and with a simple shape. It can be used in hard environments, corrupted by dust, humidity, water, acids, etc. It can also be used in vacuum and space applications.

The device can be defined as an optical scanner viewing along a polar path and capable of long distance detection.

The device is a scanner because the sensor is capable to measure the reflectance of a point located along a line passing through the scanner. A system of mirrors or prisms named deflectors and a rotator move the observed point along a circular trajectory. The objects located on a given disc or cone with respectively the center or the vertex in the scanner can be detected.

The device can be constructed as a laser scanner. Then the spatial resolution, that is the ability to distinguish the finest detail of a picture, is determined and obtained by the high collimation and very low divergence of a laser beam.

The device is an optical scanner viewing along a polar path because the system of the rotating deflectors can send the radiation beam along a 360 degrees circular path.

The scanning device can include a laser, a photodetector, a rotator with a drilled or transparent spindle and a system of deflectors that are rotating with the spindle. Input and output windows for the radiations can be placed very near to each other for obtaining an optimal paraxial configuration for the maximum detection depth. High level shielding of the input and output windows can be used in order to avoid the overload and the malfunction of the photodetector when extraneous objects are on the windows surface.

The radiation beam goes through the rotator spindle at the position and parallel to the rotation axis, it hits the first deflector which deflects the beam towards the environment. A second deflector, rotating with the first one, captures the light coming from the same direction pointed by the deflected beam and sends this light to the photodetector.

One example of vision system is capable of a 360 degrees vision of objects located over a disc passing through the scanner.

Another example of vision system is capable of 360 degrees vision of objects located over a cone with the vertex located in the scanner.

The vision systems can be made capable of less than 360 degrees vision of objects.

The vision system can be capable of operation with or without natural or artificial light and/or in presence or absence of sensor of the same kind or of different kind located in the operating range of the scanner. The signal produced by a first level of a signal processing electronics is the reflectance of the object hit by the laser beam divided by a function of the distance of the object. This measurement is a function of an angle measured between a reference system of the scanner and the object.

The angle is determined by the position of the deflectors of the scanner in respect to an internal reference.

The deflectors can be moved by a rotator that make possible the continuous variation of the angle (uniform rotatory motion) for the 360 degrees vision, or a back and forth scansion between two angular values, or a combination of motions.

The device is an optical scanning device viewing along a polar path and capable of long distance detection because this scanning operation is principally dedicated to the imaging of the real three-dimensional world. The maximum reachable distance is between some decimeters and many kilometers, depending on the optics quality and aperture, the scanning speed, the type of the radiation source and the quality of the electronis.

This scanner is different from usual scanners because of the optical-mechanical schema: the position of the radiation source, the position of the device that rotates the reflectors named "rotator" (motor or mechanical transmission), the position of the deflectors and the position of the detector (optical sensor).

The Figures show embodiments of the invention.

There is shown in

Figure 1    the optical-mechanical components of an embodiment;

Figure 2    an embodiment of a rotating spindle used as one of the components of Figure 1;

Figure 3    a perspective view of the embodiment of Figure 1;

Figure 4    the components of the embodiment encapsulated in a casing;

Figure 5    a further perspective view of the embodiment; and

Figure 6    a further embodiment.

In the embodiments the radiation source is constructed as a laser 1 which sends its laser beam 3 through a spindle 7 of a rotator 2 in the position of the rotation axis. The spindle 7 is optically transparent or has an optically transparent core.

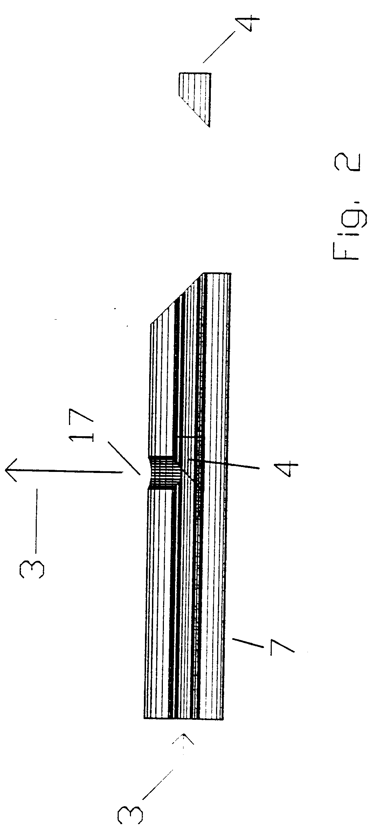

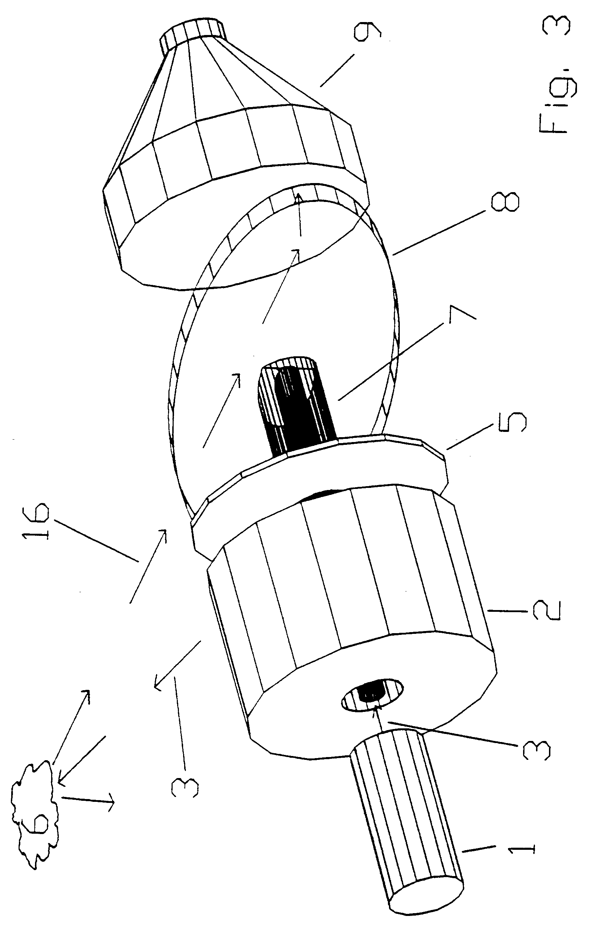

The rotator 2 is represented in the drawings as a cylinder whose rotating spindle 7 holds the system of the reflectors 4 and 8. The rotating spindle is shown in Figure 2. The first reflector 4 located inside the spindle deflects the laser beam through a hole 17 located on the curved surface of the spindle. The deflection angle is 90 degrees for the circular polar vision, or a different angle for the conical polar vision. A second deflector 8 collects the light 16 reflected by the object 6 and sends this light to the photodetector 9 that is an optical sensor eventually completed with auxiliary lenses or mirrors. Figure 3 is a perspective viw of the path followed by the laser beam 3. The laser beam 3 enters the rotating spindle 7, it is then directed towards the object 6 and then returns the reflected light 16 to the photodetector 9.

The spatial resolution of the system is determined by the quality of the radiation beam, particularly of the laser beam. It follows that only the first deflector 4 must exhibit high optical performances. The second deflector 8 must only collect the largest amount of light reflected or back-scattered by the object 6 and redirect the light 16 to the photodetector 9. The imperfections or simple and economical construction of the second deflector 8 does not reduce the spatial resolution of the scanner.

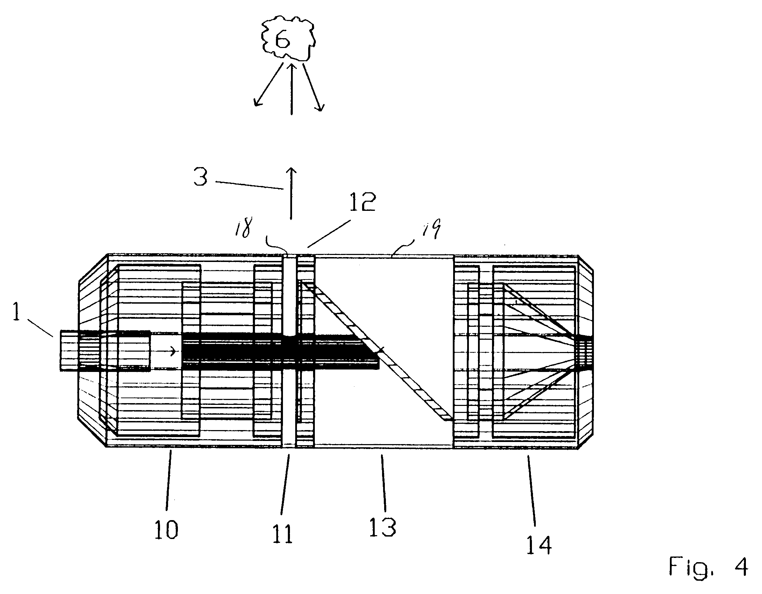

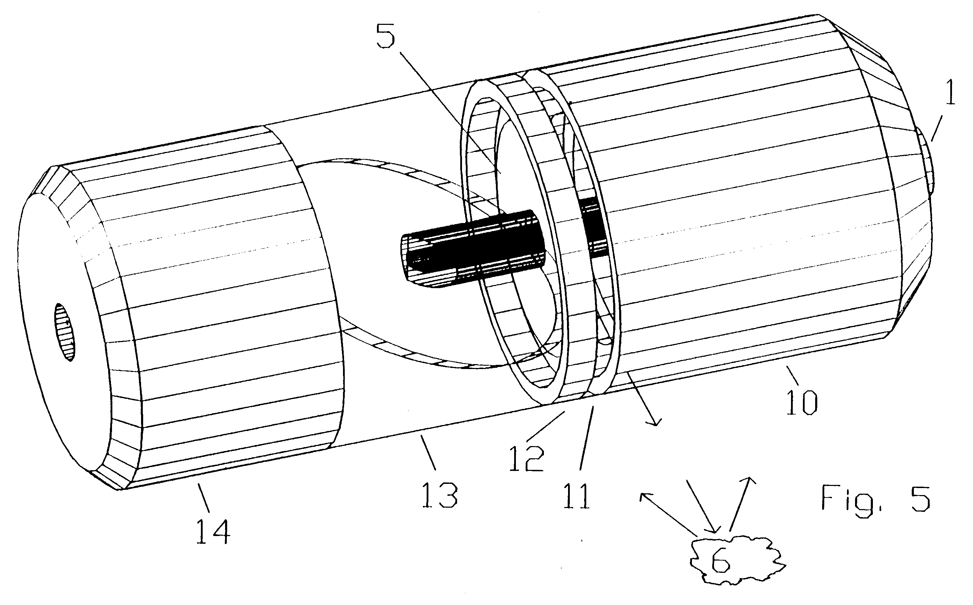

An interesting and peculiar property of this geometry is that a high vicinity of two slits 11 and 13, namely the laser output slit 11 and light entrance slit 13 is possible. Figures 4 and 5 show the scanning device assembled and completed with a box or casing 10, 14 and the two transparent windows 18, 19 for the slits 11 and 13. This peculiar construction allows a high grade sealing and protection from the environment. The close vicinity of the two windows of the slits 11 and 13 allows that, for any given rotational angle A determined by the rotator, the area into which may exist a source of light detectable by the photodetector is overlapped by the laser spot for almost any distance separating the scanner from the object. The vicinity property maximizes the scanner ability to detect an object when the distance between the scanner and the object is changed. This is an optimal paraxial scanner indeed.

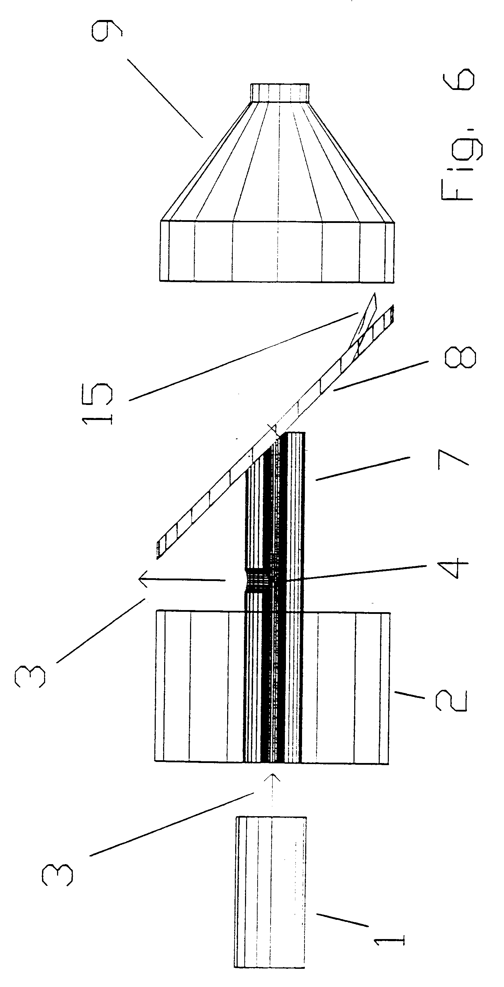

When the distance between the scanner and object is very small the laser spot can be in any case detected with a special modification of the second deflector 8. An example of a modified deflector is shown in Figure 6, part 15. The deflector 8 is in this case a mirror. A small part of the surface exhibits a different angle of deflection that can be computed following the classical optical theories according to the range required from the particular instrument.

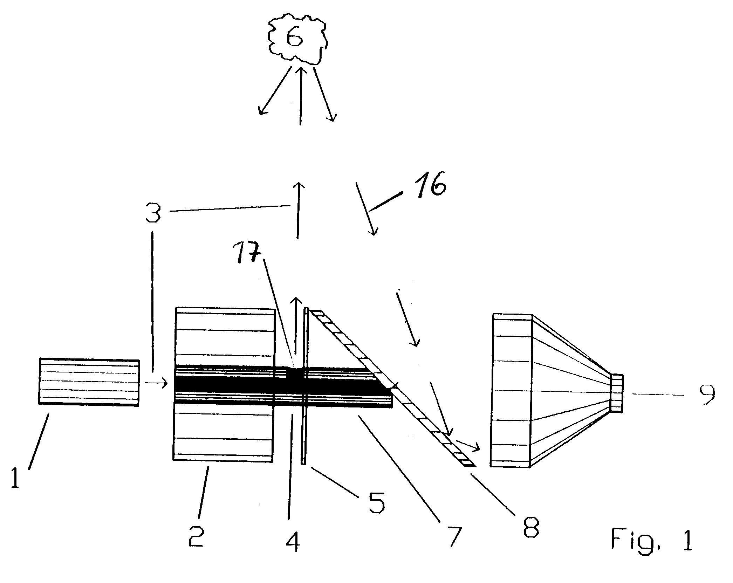

An absolute separation of the two slits 11 and 13 and the consequent hard shielding is achieved by the internal shield 5 and the shielding effect of the external shield 12 between the laser path 3 and the input light path 16. Therefore the slits 11 and 13 can be covered by a transparent protection means named window 18 and 19. The windows are used to avoid that extraneous objects, dust, water, vapours etc. could penetrate inside the scanner. If the slit shielding effected by the internal shield 5 and the external shield 12 is removed or a coaxial optical configuration is employed, the extraneous objects or the dirt that can accumulate on the windows are able to reflect the laser light towards the photodetector from a very short distance and could cause severe malfunctions of such a simplified scanner. This problem is overcome by the optical-mechanical schema of this invention. It is important to see the internal shield 5 shown in Figure 1 and the external shield 12 shown in Figure 4.

The invention will be described in a practical form that is not a limitation of the original design structure and has to be considered as a further explanation of the drawings.

The kind of laser that should be chosen for this scanner according to the technological development of our time is the solid state laser. For short distances, from some centimeters up to some tens of meters the diode laser is a good choice. It can emit a high quality beam in the visible or infrared region of the spectrum. This kind of laser is very compact and inexpensive. Its typical size is the size of a cylinder having a diameter of about 12 mm and a length of 20 - 40 mm. The divergence of the beam is typically about 0.5 milliradians. The visible laser diode enables the human eye to see the scanning spot and allows the easy installation of the scanner. The infrared diode laser is not visible to the human eye and as a consequence allows the operation of the scanner in a more discrete way.

The optically pumped solid state laser is a more powerful source of light. It is expensive, has a larger size, is heavier, but it can generate high energy pulses making it a good choice for long distance lidar applications.

In order to make the photodetector system insensitive to the environmental light and also insensitive to the light emitted by other scanners or similar electro-optic devices, it employs optical filters that are mounted in face to the photodetector and/or modulation techniques of the laser beam amplitude. The optical filters are transparent to the light reemitted by the object: the laser wavelength or the wavelength of some fluorescence emitted by the object hit by the laser beam. The modulation techniques are currently used, and it is not important to cite here the operating principles. It is only important to say that it is possible to design a simple electronics capable of extracting from all the signals generated by the photodetector, the signal originated by the laser controlled by the electronics itself, all the other signals ignored.

Using a correctly designed optics the amplitude of the useful signal at the output of the photodetector could be expressed as: $F = K*P*S*R*l/(d^2)$. Where K is an instrumental constant, P is the laser power, S is the effective area of the photodetector, R is the object reflectance or a reemission coefficient and d is the distance between the scanner and the object.

In order to reduce the size of the scanner it is useful to employ an electric motor to rotate the reflectors assembly. It is possible to use a constant rotating speed motor complete with an angular encoder to have the correspondence between the angle A and the position of the detected object. The use of a stepper motor allows the choice of an unlimited variety of scansion strategies.

It can be used a rotator 2 with a drilled spindle 7 or a spindle 7 with a core transparent to the laser light. If there is no need of a 360 degrees vision, the laser beam 3 could be intercepted by a photoswitch located inside the scanner itself. This reference pulse can be used instead of a rotator encoder as position reference signal for the time domain analysis of the photodetector signal. This simplified electronics produce sync and data signals similar to the signals produced by a linear camera.

The first deflector 4 that could be a mirror or a prism must preserve the laser beam quality. It should be a high quality piece of optics, but its small size helps to reduce the cost of this element.

The second deflector 8 could be conveniently produced using a well alluminated plastic foil fixed on a metal or plastic holder.

If the photodetector 9 is complete with a collimating optics, the second deflector 8 can assume the elliptical-planar form as shown in the figures complete with the flexure 15 that allows the detection of the spot when observing at short distances.

The mirror of the second deflector 8 can have focussing properties if the photodetector optics requires this characteristic.

The pratical and optical properties of this scanner can be tested without resorting to modulation techniques. A cheap 1 to 10 mW VLD visible diode laser module could be employed and a silicon photodiode can be used as photodetector. The photodiode can be connected directly to an oscilloscope input.

On the other hand the control electronics can process the photodetector signal in a large number of ways, depending on the application. It is possible to compare a number of subsequent scanlines in order to determine the movements of the objects into the scanner range. The scanner system is able to measure the angular position of the nearest object and a robot arm controller could feedback guide its arm toward the object. If the distance between the scanner and the object is constant it is possible to take size measurements of objects and reflectance or fluorescence measurements according to the object material.

The scanner could be used for pipe internal inspection and also tunnel or subway inspection.

Its large viewing angle is compatible to vehicle automatic guidance during the parking procedure.

In summary, a new laser scanner has been described. It can find application in vision systems, automation, robotics, surveillance. The low cost, the simple design and construction, the ruggedness, the insensitivity to external lights and the ease of the signal analysis are useful properties of this scanner.

It could be successfully and economically employed where actual standard and more expensive vision systems are used. It can also be employed in the place of simple photocells obtaining more accurate information and a better control of the operating machine connected to the sensor.

Obviously the invention is not limited to the details shown in this paper and/or here descirbed in a schematic manner. It also covers those variations or equivalent shapes that are easily designed by the experts of this kind of devices starting from the description of this optical schema.

## Claims

1. An optical scanning device comprising
   - a radiation source (1) for producing and emitting an optical radiation beam;
   - a first rotating deflector (4) having a rotation axis which extends along the path of the emitted radiation beam and deflecting the incident radiation beam towards an object (6) to be scanned;
   - a second rotating deflector (8) rotating on the same axis as the first deflector (4) and deflecting a radiation reflected and/or scattered by the object (6); and
   - a detector (9) receiving the radiation deflected by the second deflector (8).

2. A scanning device according to claim 1, wherein a shielding means (5) is disposed between the first deflector (4) and the second deflector (8).

3. A scanning device according to claim 1 or 2, wherein the first deflector (4) deflects the incident radiation by an angle of 90 degress.

4. A scanning device according to claim 1 or 2, wherein the first deflector (4) deflects the incident radiation beam by an angle which is different from 90 degrees.

5. A scanning device according to any one of the claims 1 to 4, wherein the scanning angle around the rotation axis is 360 degrees or less.

6. A scanning device according to any one of the claims 1 to 5, wherein the two deflectors (4, 8) are mounted on a rotating spindle (7) with a core transparent to the radiation beam emitted by the radiation source.

7. A scanning device according to any one of the claims 1 to 6, wherein the radiation source (1) is a laser beam source.

8. A scanning device according to any one of the claims 1 to 7, wherein the radiation source (1), the two deflectors (4, 8) and the detector (9) are covered by a common casing (12) which has a first window (18) transparent for the radiation directed towards the object (6) and a second window (19) transparent for the radiation reflected and/or scattered by the object (6).

Fig. 1

EP 0 553 698 A1

Fig. 2

EP 0 553 698 A1

Fig. 3

EP 0 553 698 A1

EP 0 553 698 A1

Fig. 4

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 943 128 (H.TAKADA ET AL.)<br>* abstract; claim 1; figure 23 *<br>* column 10, line 31 - line 52 * | 1,8 | G02B26/10 |
| A | EP-A-0 226 273 (THE SECRETARY OF DEFENCE IN HER BRITTANNIC MAJESTY'S GOVERNMENT OF THE)<br>* abstract; claims 1,4; figure 2 * | 1 | |
| A | US-A-4 326 799 (W.H.KEENE)<br>* abstract; figure 2 * | 1 | |

|  |  |
|---|---|
|  | TECHNICAL FIELDS SEARCHED (Int. Cl.5 ) |
|  | G02B<br>G01S |

The present search report has been drawn up for all claims

| Place of search | Date of completion of the search | Examiner |
|---|---|---|
| THE HAGUE | 29 MAY 1993 | VAN DOREMALEN J.C. |

EPO FORM 1503 03.82 (P0401)